# EUROPÄISCHE PATENTANMELDUNG

(11) **EP 3 048 589 A1**
(43) Veröffentlichungstag der Anmeldung: **27.07.2016**
(21) Anmeldenummer: 15197071.2
(22) Anmeldetag: 30.11.2015
(51) Int. Cl.: G07D 7/00, G07D 7/12

(54) **INSPEKTION VON OVI-FEATURES**

(30) Priorität: 23.01.2015 AT 302015
(71) Anmelder: AIT Austrian Institute of Technology GmbH, 1220 Wien (AT)
(72) Erfinder: STOLC, Svorad, 831 01 Bratislava (SK); HEISS, Dorothea, 1230 Wien (AT); HUBER-MÖRK, Reinhold, 1220 Wien (AT)
(74) Vertreter: Wildhack & Jellinek

(57) **Zusammenfassung**

Die Erfindung betrifft ein Verfahren zur Prüfung eines bedruckten Objekts (1) auf einen Aufdruck mit einer vorgegebenen OVI-Tinte, die bei Weißlicht-Bestrahlung einer mit ihr bedruckten Oberfläche unter einem vorgegebenen ersten Winkel (α) Licht mit einem ersten Spektrum (S₁) abgibt und bei Weißlicht-Bestrahlung einer mit ihr bedruckten Oberfläche unter einem vorgegebenen vom ersten Winkel (α) abweichenden zweiten Winkel (β) Licht mit einem zweiten Spektrum (S₂) abgibt,

Es ist vorgesehen, dass für eine Anzahl von Oberflächenpunkten (2) innerhalb eines Oberflächenbereichs (5) des Objekts jeweils die folgenden Schritte durchgeführt werden, nämlich dass
- der Sehstrahl (11) eines Helligkeitssensors (10) auf den jeweiligen Oberflächenpunkt (2) des Objekts (1) gerichtet wird, wobei mit dem Helligkeitssensor (10) Licht in zumindest zwei voneinander unterschiedlichen Wellenlängenbereichen (λ₁, λ₂) detektiert wird,
- der von einer ersten Lichtquelle (21) abgegebene erste Lichtstrahl (22) auf den Oberflächenpunkt (2) des Objekts (1) gerichtet wird, wobei der Sehstrahl (11) und der erste Lichtstrahl (22) in einem Winkel der Größe des ersten Winkels (α) zueinander angeordnet werden,
- der von einer zweiten Lichtquelle (31) abgegebene zweite Lichtstrahl (32) auf den Oberflächenpunkt (2) des Objekts (1) gerichtet wird, wobei der Sehstrahl (11) und der zweite Lichtstrahl (32) in einem Winkel der Größe des zweiten Winkels (β) zueinander angeordnet werden, und
- jeweils mit dem Helligkeitssensor (10) sowohl Licht im ersten Wellenlängenbereich (λ₁) als auch im zweiten Wellenlängenbereich (λ₂) jeweils ein Intensitätswert ermittelt und dem jeweiligen Oberflächenpunkt (2) ein Intensitätsvektor (V) umfassend die beiden Intensitätswerte (I₁, I₂) zugewiesen wird.

Anschließend wird überprüft, ob innerhalb der für den jeweiligen Oberflächenbereich (5) Helligkeitswerte ermittelten und den einzelnen Oberflächenpunkten (2) zugewiesenen Intensitätswerte (I₁, I₂) bei den beiden Wellenlängen (λ₁, λ₂) zwei voneinander abweichende Häufungen (H₁, H₂) bestehen.

## Beschreibung

Die Erfindung betrifft ein Verfahren zur Prüfung eines bedruckten Objekts auf einen Aufdruck mit einer OVI-Tinte gemäß dem Oberbegriff des Patentanspruchs 1. Weiters betrifft die Erfindung eine Vorrichtung zur Prüfung eines bedruckten, auf einem Objektträger befindlichen Objekts auf einen Aufdruck mit einer vorgegebenen OVI-Tinte gemäß dem Oberbegriff des Patentanspruchs 9. Schließlich betrifft die Erfindung einen Datenträger, auf dem ein Programm zur Durchführung eines erfindungsgemäßen Verfahrens abgespeichert ist.

Unter einer OVI-Tinte versteht die Erfindung eine Tinte, die ausrichtbare Teilchen, auch Flakes genannt, aufweist, die bei Weißlichtbestrahlung einer mit ihr bedruckten Oberfläche unter einem vorgegebenen ersten Winkel Licht mit einem Spektrum abgibt, und bei Weißlichtbestrahlung einer mit ihr bedruckten Oberfläche unter einem vorgegebenen vom ersten Winkel abweichenden zweiten Winkel Licht mit einem zweiten Spektrum abgibt.

Im Stand der Technik sind an sich Verfahren bekannt, mit denen eine winkelabhängige Spektralmessung von Oberflächen möglich ist. Solche Verfahren haben jedoch den wesentlichen Nachteil, dass insbesondere für den Fall, dass Oberflächenbestandteile von Gegenständen glänzend reflektieren, eine wirksame Detektion unmöglich wird.

Aufgabe der Erfindung ist es, ein Verfahren sowie eine Vorrichtung zur Verfügung zu stellen, mit der Gegenstände, die mit einer OVI-Tinte bedruckt sind, wirksam und einfach erkannt werden können.

Die Erfindung löst diese Aufgabe bei einem Verfahren der eingangs genannten Art mit den kennzeichnenden Merkmalen des Patentanspruchs 1. Bei einem Verfahren zur Prüfung eines bedruckten Objekts auf einen Aufdruck mit einer vorgegebenen OVI-Tinte, die bei Weißlicht-Bestrahlung einer mit ihr bedruckten Oberfläche unter einem vorgegebenen ersten Winkel Licht mit einem ersten Spektrum abgibt und bei Weißlicht-Bestrahlung einer mit ihr bedruckten Oberfläche unter einem vorgegebenen vom ersten Winkel abweichenden zweiten Winkel Licht mit einem zweiten Spektrum abgibt, ist vorgesehen, dass
a) für eine Anzahl von Oberflächenpunkten innerhalb eines Oberflächenbereichs des Objekts jeweils die folgenden Schritte durchgeführt werden, nämlich dass
   - der Sehstrahl eines Helligkeitssensors auf den jeweiligen Oberflächenpunkt des Objekts gerichtet wird, wobei mit dem Helligkeitssensor Licht in zumindest zwei voneinander unterschiedlichen Wellenlängenbereichen detektiert wird,
   - der von einer ersten Lichtquelle abgegebene erste Lichtstrahl auf den Oberflächenpunkt des Objekts gerichtet wird, wobei der Sehstrahl und der erste Lichtstrahl in einem Winkel der Größe des ersten Winkels zueinander angeordnet werden,
   - der von einer zweiten Lichtquelle abgegebene zweite Lichtstrahl auf den Oberflächenpunkt des Objekts gerichtet wird, wobei der Sehstrahl und der zweite Lichtstrahl in einem Winkel der Größe des zweiten Winkels zueinander angeordnet werden, und
   - dass der Winkel zwischen einem vom Oberflächenpunkt des Objekts abgehenden und entlang der Winkelsymmetrale zwischen dem ersten Lichtstrahl und dem Sehstrahl verlaufenden ersten Symmetralstrahl und einem normal zur Oberfläche des Objekts stehenden und den Oberflächenpunkt des Objekts schneidenden Normalenstrahl auf einen vorgegebenen dritten Winkel festgelegt wird, und
   - dass der Winkel zwischen einem vom Oberflächenpunkt des Objekts abgehenden und entlang der Winkelsymmetrale zwischen dem zweiten Lichtstrahl und dem Sehstrahl verlaufenden zweiten Symmetralstrahl und dem Normalenstrahl auf einen vorgegebenen vierten Winkel festgelegt wird, der insbesondere dem ersten Winkel entspricht, und
   - jeweils mit dem Helligkeitssensor sowohl Licht im ersten Wellenlängenbereich als auch im zweiten Wellenlängenbereich jeweils ein Intensitätswert ermittelt und dem jeweiligen Oberflächenpunkt ein Intensitätsvektor umfassend die beiden Intensitätswerte zugewiesen wird, und
b) anschließend überprüft wird, ob innerhalb der für den jeweiligen Oberflächenbereich Helligkeitswerte ermittelten und den einzelnen Oberflächenpunkten zugewiesenen Intensitätswerte bei den beiden Wellenlängen zwei voneinander abweichende Häufungen bestehen,
   wobei insbesondere die erste Häufung von Intensitätsvektoren durch einen ersten Häufungsvektor charakterisiert ist, der den jeweiligen Intensitätswerten bei den beiden Wellenlängenbereichen entspricht und die zweite Häufung von Intensitätsvektoren durch einen zweiten Häufungsvektor charakterisiert ist, der den jeweiligen Intensitätswerten bei den beiden Wellenlängenbereich entspricht, und
c) bei Vorliegen zweier solcher unterscheidbarer Häufungen das Objekt im Oberflächenbereich als mit OVI-Tinte, insbesondere bzw. OVI-Tinte eines speziellen Typs, bedruckt erkannt wird.

Mit dem erfindungsgemäßen Vorgehen ist es mit einfachen Messmethoden und mit geringem Rechenaufwand möglich, Gegenstände zu detektieren, die mit OVI-Tinte bedruckt sind.

Um auf einfache Weise zu vermeiden, dass glänzende Reflexionen das Messergebnis beeinträchtigen, kann erreicht werden, indem der erste Winkel in einem Bereich von 20° bis 40° und der zweite Winkel in einem Bereich von 80° bis 100° gewählt wird oder dass der erste Winkel in einem Bereich von 10°bis 50° und der zweite Winkel in einem Bereich von 70° bis 110°, gewählt wird, und/oder
dass der dritte Winkel größer als 10°, insbesondere zwischen 20° und 50° liegt, und
dass der vierte Winkel größer als 10°, insbesondere zwischen 20° und 50° liegt.

Ein einfacher Aufbau, sieht vor, dass der Sehstrahl, der erste Lichtstrahl und der zweite Lichtstrahl, die Symmetralstrahlen sowie der Normalenstrahl in dieselbe Ebene gelegt werden.

Eine bevorzugte Auswahl der Intensität der ersten und zweiten Lichtquelle, die eine einfache Unterscheidung der beiden unterschiedlichen Spektren der OVI-Tinte bei unterschiedlichen Einstrahlungswinkeln ermöglicht, sieht vor,
dass die Intensität des von der ersten Lichtquelle abgegebenen ersten Lichtstrahls im ersten der Wellenlängenbereiche derart gewählt wird, dass die diesem Wellenlängenbereich jeweils zugeordnete Strahlungsintensität im ersten Spektrum größer ist als die diesem Wellenlängenbereich jeweils zugeordnete Strahlungsintensität im zweiten Spektrum, **und/oder**
dass die Intensität des von der zweiten Lichtquelle abgegebenen zweiten Lichtstrahls im jeweils anderen zweiten Wellenlängenbereich derart gewählt wird, dass die diesem zweiten Wellenlängenbereich jeweils zugeordnete Strahlungsintensität im zweiten Spektrum größer ist als die dem zweiten Wellenlängenbereich zugeordnete Strahlungsintensität im ersten Spektrum.

Um die Lichtquellen bzw. deren Spektren voneinander vorteilhaft unterscheiden zu können, kann vorgesehen sein, dass der erste Wellenlängenbereich derart gewählt wird, dass der dem ersten Wellenlängenbereich jeweils zugeordnete Intensitätswert im ersten Spektrum größer ist als der dem ersten Wellenlängenbereich jeweils zugeordnete Intensitätswert im zweiten Spektrum, **und/oder,**
dass der zweite Wellenlängenbereich gewählt derart gewählt wird, dass der dem zweiten Wellenlängenbereich jeweils zugeordnete Intensitätswert im zweiten Spektrum größer ist als der dem zweiten Wellenlängenbereich jeweils zugeordnete Intensitätswert im ersten Spektrum.

Ein besonders einfacher Aufbau des Helligkeitssensors sieht vor, dass der Helligkeitssensor zwei Teilsensoren mit separaten Farbkanälen aufweist, wobei mit dem ersten der beiden Teilsensoren ausschließlich die Intensität des Lichts im ersten Wellenlängenbereich detektiert wird und der Anteil des von der ersten Lichtquelle abgegebenen und vom Objekt reflektierten Lichts im ersten Wellenlängenbereich ermittelt wird und mit dem zweiten Teilsensor die Intensität des Lichts, insbesondere ausschließlich im zweiten Wellenlängenbereich, detektiert wird und der Anteil des von der zweiten Lichtquelle abgegebenen und vom Objekt reflektierten Licht im zweiten Wellenlängenbereich ermittelt wird.

Eine zusätzliche Verbesserung der Genauigkeit der Detektion und der Unterscheidung der beiden bei unterschiedlichen Einstrahlungswinkeln abgegebenen Lichtspektren sieht vor, dass von der ersten Lichtquelle aus Licht innerhalb eines dritten Wellenlängenbereichs, insbesondere im Infrarotbereich, auf den jeweiligen Objektpunkt des Objekts eingestrahlt wird, und dass vom Helligkeitssensor der vom Objekt bei einer dritten Wellenlänge zurückgestrahlte Intensitätswert ermittelt wird,
wobei ein Bildpunkt, bei dem der jeweilige Intensitätswert für den dritten Wellenlängenbereich mit dem ersten Intensitätswert für den ersten Wellenlängenbereich oder mit dem zweiten Intensitätswert für den zweiten Wellenlängenbereich korreliert der Oberflächenbereich als mit OVI-Tinte bedruckt erkannt wird.

Eine besonders vorteilhafte Ausführungsform, mit der die Oberfläche eines Gegenstands vollständig abbildbar und auf das Vorhandensein einer OVI-Tinte untersuchbar ist, sieht vor, dass gleichzeitig eine Anzahl von auf einer Linie der Oberfläche des Objekts liegenden Oberflächenpunkten inspiziert wird, wobei
- gleichzeitig durch eine Anzahl von separaten gemeinsam linienförmig hintereinander angeordneten Helligkeitssensoren jeweils Intensitätswerte bei zumindest den beiden Wellenlängenbereichen aufgenommen werden, wobei die Helligkeitssensoren jeweils auf einen auf der Linie der Oberfläche des Objekts liegenden Oberflächenpunkt gerichtet werden,
- die jeweils ersten Lichtstrahlen und zweiten Lichtstrahlen jeweils von einer einzigen ersten und zweiten Linienlichtquelle auf die Linie der Oberfläche des Objekts projiziert werden, und
- dass das Objekt normal oder im Winkel zur Richtung der Linie sowie ohne Änderung des Abstands zu den Lichtquellen und zu den Helligkeitssensoren, insbesondere von einem Förderband oder einer Transporttrommel, fortbewegt wird.

Die Bestrahlung des Gegenstands kann vorteilhafterweise mit weißem Licht erfolgen. Alternativ ist es auch möglich, den Gegenstand mit Licht zu beleuchten, das innerhalb eines Teilbandes des sichtbaren Lichts eine einen Schwellenwert überschreitende Intensität aufweist.

Die Erfindung löst diese Aufgabe bei einer Vorrichtung der eingangs genannten Art mit den kennzeichnenden Merkmalen des Patentanspruchs 9. Eine erfindungsgemäße Vorrichtung zur Prüfung eines bedruckten, insbesondere auf einem Objektträger befindlichen, Objekts auf einen Aufdruck mit einer vorgegebenen OVI-Tinte, die bei Weißlicht-Bestrahlung einer mit ihr bedruckten Oberfläche unter einem vorgegebenen ersten Winkel Licht mit einem ersten Spektrum abgibt und bei Weißlicht-Bestrahlung einer mit ihr bedruckten Oberfläche unter einem vorgegebenen vom ersten Winkel abweichenden zweiten Winkel Licht mit einem zweiten Spektrum abgibt, umfasst
a) einen Helligkeitssensor zur Bestimmung der Lichtintensität in zumindest zwei voneinander unterschiedlichen Wellenlängenbereichen, dessen Sehstrahl auf den jeweiligen Oberflächenpunkt des Objekts gerichtet ist, wobei am Ausgang des jeweiligen Helligkeitssensors ein Intensitätsvektor umfassend zwei Intensitätswerte anliegen, wobei der erste Intensitätswert der Intensität des auf den Helligkeitssensor einstrahlenden Lichts im ersten Wellenlängenbereich entspricht und wobei der zweite Intensitätswert der Intensität des auf den Helligkeitssensor einstrahlenden Lichts im zweiten Wellenlängenbereich entspricht,
b) eine erste Lichtquelle zur Abgabe eines ersten Lichtstrahls, der auf einen Oberflächenpunkt des Objekts gerichtet ist, wobei der Sehstrahl und der erste Lichtstrahl in einem Winkel der Größe des ersten Winkels zueinander stehen,
c) eine zweite Lichtquelle zur Abgabe eines zweiten Lichtstrahls, der auf den Oberflächenpunkt des Objekts gerichtet ist, wobei der Sehstrahl und der zweite Lichtstrahl in einem Winkel der Größe des zweiten Winkels zueinander stehen,
   - dass der Winkel zwischen einem vom Oberflächenpunkt des Objekts abgehenden und entlang der Winkelsymmetrale zwischen dem ersten Lichtstrahl und dem Sehstrahl verlaufenden ersten Symmetralstrahl und einem normal zur Oberfläche des Objektträgers stehenden und den Oberflächenpunkt des Objekts schneidenden Normalenstrahl auf einen vorgegebenen Wert festgelegt ist, und
   - dass der Winkel zwischen einem vom Oberflächenpunkt des Objekts abgehenden und entlang der Winkelsymmetrale zwischen dem zweiten Lichtstrahl und dem Sehstrahl verlaufenden zweiten Symmetralstrahl und dem Normalenstrahl auf denselben Wert festgelegt ist, und
d) eine Prüfungseinheit, der die einzelnen Intensitätsvektoren von Oberflächenpunkten in einem Oberflächenbereich des zu prüfenden Objekts zugeführt sind, die bei Zuführung der einzelnen Intensitätsvektoren überprüft, ob innerhalb der für die jeweiligen Intensitätswerte ermittelten und den einzelnen zugewiesenen Intensitätswerte bei den beiden Wellenlängen zwei voneinander abweichende Häufungen bestehen, von denen die erste Häufung von Intensitätsvektoren um einen ersten Häufungsvektor auftritt, der den jeweiligen Intensitätswerten des ersten Spektrums bei den beiden Wellenlängenbereichen entspricht und, von denen die zweite Häufung von Intensitätsvektoren um einen zweiten Häufungsvektor auftritt, der den jeweiligen Intensitätswerten des zweiten Spektrums bei den beiden Wellenlängenbereichen entspricht, und die bei Vorliegen zweier solcher Häufungen das Objekt im Oberflächenbereich als mit OVI-Tinte bedruckt erkennt.

Einer solche Vorrichtung erlaubt die Detektion von Gegenständen, die mit OVI-Tinte bedruckt sind.

Um auf einfache Weise zu vermeiden, dass glänzende Reflexionen das Messergebnis beeinträchtigen, kann erreicht werden, indem der Sehstrahl, der erste Lichtstrahl und der zweite Lichtstrahl, die Symmetralstrahlen sowie der Normalenstrahl in dieselbe Ebene liegen.

Ein besonders einfacher Aufbau des Helligkeitssensors sieht vor, dass der Sehstrahl, der erste Lichtstrahl und der zweite Lichtstrahl, die Symmetralstrahlen sowie der Normalenstrahl in dieselbe Ebene liegen.

Eine bevorzugte Auswahl der Intensität der ersten und zweiten Lichtquelle, die eine einfache Unterscheidung der beiden unterschiedlichen Spektren der OVI-Tinte bei unterschiedlichen Einstrahlungswinkeln ermöglicht, sieht vor,
dass die Intensität des von der ersten Lichtquelle abgegebenen ersten Lichtstrahls im ersten Wellenlängenbereich derart festgelegt ist, dass der dem ersten Wellenlängenbereich jeweils zugeordnete Intensitätswert im ersten Spektrum größer ist als der den ersten Wellenlängenbereich jeweils zugeordnete Intensitätswert im zweiten Spektrum, **und/oder**
dass die Intensität des von der zweiten Lichtquelle abgegebenen zweiten Lichtstrahls im zweiten Wellenlängenbereich derart festgelegt ist, dass der dem zweiten Wellenlängenbereich jeweils zugeordnete Intensitätswert im zweiten Spektrum größer ist als der dem zweiten Wellenlängenbereich zugeordnete Intensitätswert im ersten Spektrum.

Eine bevorzugte Festlegung der Wellenlängenbereiche sieht vor, dass der erste Wellenlängenbereich derart festgelegt ist, dass der dem ersten Wellenlängenbereich jeweils zugeordnete Intensitätswert im ersten Spektrum größer ist als der dem ersten Wellenlängenbereich jeweils zugeordnete Intensitätswert im zweiten Spektrum, und/oder, dass der zweite Wellenlängenbereich gewählt derart gewählt ist, dass der dem zweiten Wellenlängenbereich jeweils zugeordnete Intensitätswert im zweiten Spektrum größer ist als der dem zweiten Wellenlängenbereich jeweils zugeordnete Intensitätswert im ersten Spektrum.

Um die Lichtquellen bzw. deren Spektren voneinander vorteilhaft unterscheiden zu können, kann vorgesehen sein, dass der Helligkeitssensor zwei Teilsensoren mit separaten Farbkanälen aufweist, wobei der erste der beiden Teilsensoren ausschließlich für den ersten Wellenlängenbereich sensitiv ist und den Anteil der von der ersten Lichtquelle abgegebenen und vom Objekt reflektierten Licht im ersten Wellenlängenbereich ermittelt und der zweite Teilsensor, insbesondere ausschließlich für den zweiten Wellenlängenbereich sensitiv ist und den Anteil der von der zweiten Lichtquelle abgegebenen und vom Objekt reflektierten Licht im zweiten Wellenlängenbereich ermittelt.

Eine zusätzliche Verbesserung der Genauigkeit der Detektion und der Unterscheidung der beiden bei unterschiedlichen Einstrahlungswinkeln abgegebenen Lichtspektren sieht vor, dass von der ersten Lichtquelle aus Licht innerhalb eines dritten Wellenlängenbereichs, insbesondere im Infrarotbereich, auf den jeweiligen Objektpunkt des Objekts eingestrahlt wird, und dass vom Helligkeitssensor der vom Objekt bei einer dritten Wellenlänge zurückgestrahlte Intensitätswert mit dem ersten Intensitätswert für den ersten Wellenlängenbereich oder mit dem zweiten Intensitätswert für den zweiten Wellenlängenbereich korreliert der Oberflächenbereich als mit OVI-Tinte bedruckt erkannt wird.

Eine besonders vorteilhafte Ausführungsform, mit der die Oberfläche eines Gegenstands vollständig abbildbar und auf das Vorhandensein einer OVI-Tinte untersuchbar ist, sieht vor, dass
- eine Anzahl von separaten gemeinsam linienförmig hintereinander angeordneten Helligkeitssensoren zur Aufnahme von Helligkeitswerten vorgesehen sind, die jeweils auf einen auf der Linie der Oberfläche des Objekts liegenden Oberflächenpunkt gerichtet sind,
- dass die Lichtquellen als Linienlichtquellen ausgebildet sind, wobei die erste Lichtquelle eine ersten Lichtebene und die zweite Lichtquelle eine zweite Lichtebene auf die Linie der Oberfläche des Objekts abgibt, und
- dass gegebenenfalls eine Fördereinrichtung zur Bewegung des Objekts normal oder im Winkel zur Richtung der Linie sowie ohne Änderung des Abstands zu den Lichtquellen und zu den Helligkeitssensoren, insbesondere ein Förderband oder eine Trommel zur Beförderung des Objekts, aufweist.

Die beiden Lichtquellen strahlen vorteilhafterweise jeweils weißes Licht ab. Alternativ ist es auch möglich, dass die beiden Lichtquellen jeweils Licht abstrahlen, das innerhalb eines Teilbandes des sichtbaren Lichts eine einen Schwellenwert überschreitende Intensität aufweist. Das Spektrum des von der ersten Lichtquellen abgestrahlten Lichts kann sich auch von dem Spektrum des von der zweiten Lichtquellen abgestrahlten Lichts unterscheiden.

Bevorzugte Ausführungsbeispiele der Erfindung werden anhand der folgenden Zeichnungsfiguren näher dargestellt.

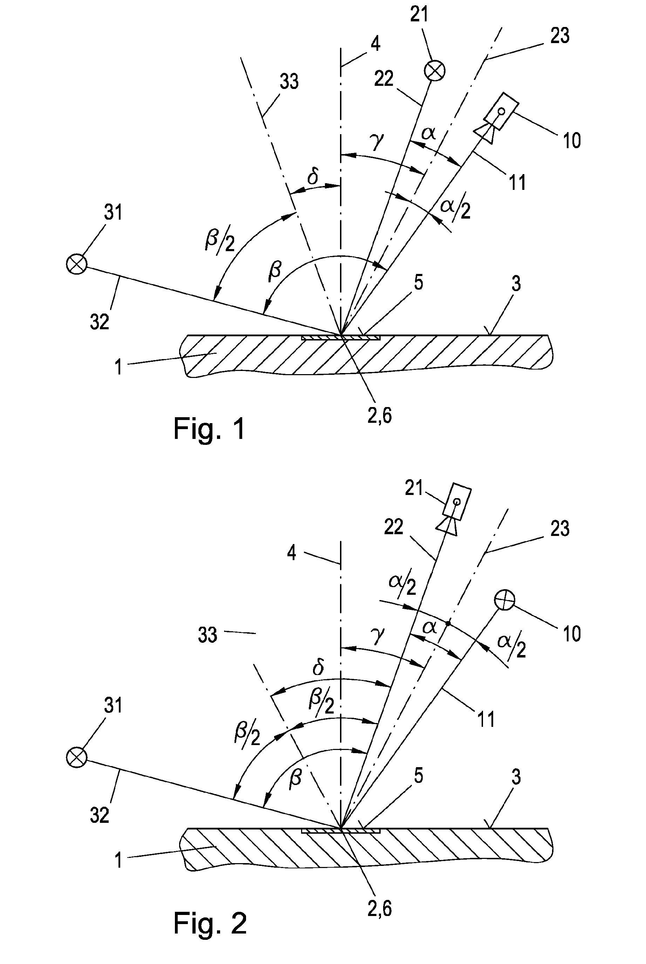

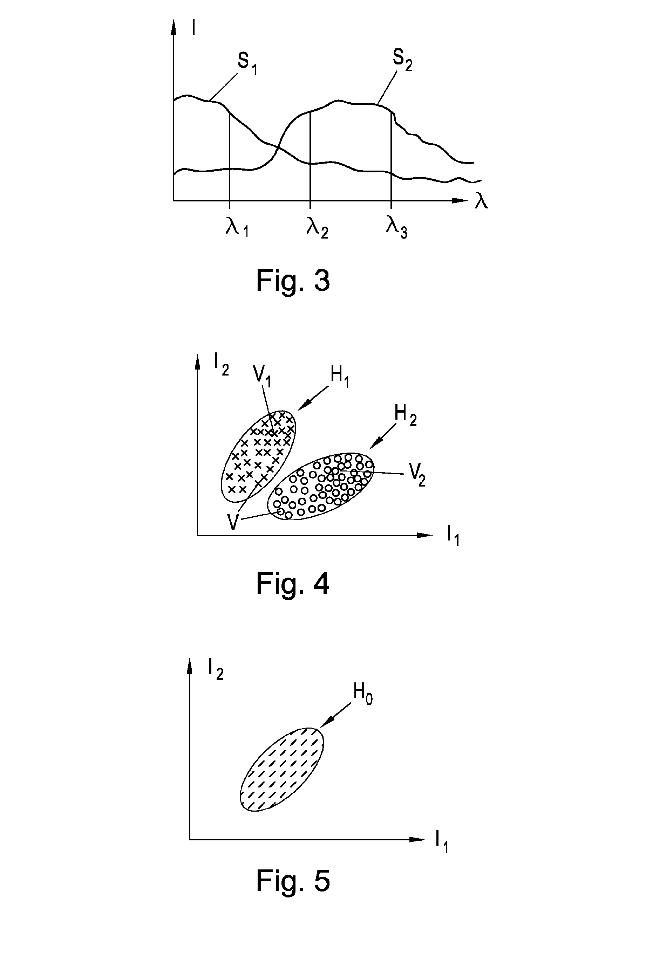

**Fig.** 1 zeigt eine Vorrichtung gemäß einer ersten Ausführungsform der Erfindung. **Fig. 2** zeigt eine Vorrichtung gemäß einer zweiten Ausführungsform der Erfindung. **Fig. 3** zeigt unterschiedliche Spektren, die bei unterschiedlichem Einfallswinkel von Licht bei der Bestrahlung von OVI-Tinte detektierbar sind. In **Fig. 4** ist eine Anzahl von Helligkeitswerten bei unterschiedlichen Wellenlängen einander gegenüber gestellt, wobei die Aufnahme von einem Gegenstand erstellt wurde, der mit OVI-Tinte bedruckt ist. In **Fig. 5** ist eine Anzahl von Helligkeitswerten bei unterschiedlichen Wellenlängen einander gegenüber gestellt, wobei die Aufnahme von einem Gegenstand erstellt wurde, der nicht mit OVI-Tinte bedruckt ist.

In **Fig. 1** ist eine Ausführungsform einer erfindungsgemäßen Vorrichtung zur Prüfung eines bedruckten Objekts 1 dargestellt. Dieses Objekt 1 befindet sich auf einem nicht dargestellten Objektträger. Die Vorrichtung dient zur Prüfung des Objekts 1 auf das Vorhandensein eines Aufdrucks 5 mit einer OVI-Tinte. Diese OVI-Tinte gibt bei Bestrahlung mit weißem Licht unter jeweils unterschiedlichen Winkeln α, β jeweils unterschiedliche Spektren S₁, S₂ ab. Bei einer Bestrahlung mit weißem Licht unter einem ersten Winkel α gibt sie Licht in einem ersten Spektrum S₁ (**Fig. 3**) ab. Bei Bestrahlung mit weißem Licht einer mit ihr bedruckten Oberfläche unter einem vorgegebenen, vom ersten Winkel α abweichenden zweiten Winkel β gibt sie Licht mit einem zweiten Spektrum S₂ ab.

Das in **Fig. 1** dargestellte Objekt 1 wird von zwei Lichtquellen 21, 31, die von unterschiedlichen Richtungen aus auf das Objekt 1 gerichtet sind, bestrahlt. Im vorliegenden Ausführungsbeispiel der Erfindung strahlen die beiden Lichtquellen 21, 31 jeweils weißes Licht ab. Alternativ kann auch vorgesehen sein, dass die beiden Lichtquellen 21, 31 jeweils Licht abstrahlen, das innerhalb eines Teilbandes des sichtbaren Lichts eine einen Schwellenwert überschreitende Intensität aufweist. Das vom Objekt 1 reflektierte Licht wird von einem unter einem Winkel auf das Objekt 1 gerichtete Sensor 10 detektiert.

Die Intensität des von der ersten Lichtquelle 21 abgegebenen ersten Lichtstrahls 22 wird in einem ersten Wellenbereich λ₁ ist derart festgelegt, dass die diesem Wellenbereich zugeordnete Strahlungsintensität im ersten Spektrum S₁ größer ist als die diesem Wellenlängenbereich jeweils zugeordnete Strahlungsintensität im zweiten Spektrum S₂.

Alternativ kann der erste Wellenlängenbereich λ₁ derart gewählt werden, dass der dem ersten Wellenlängenbereich jeweils zugeordnete Intensitätswert I₁ im ersten Spektrum S₁ größer ist als der im ersten Wellenlängenbereich λ₁ jeweils zugeordnete Intensitätswert im zweiten Spektrum S₂.

Die Intensität des von der zweiten Lichtquelle abgegebenen zweiten Lichtstrahls 32 in einem zweiten Wellenlängenbereich λ₂ ist derart festgelegt, dass die dem zweiten Wellenlängenbereich λ₂ jeweils zugeordnete Strahlungsintensität im zweiten Spektrum S₂ größer ist als die dem zweiten Wellenlängenbereich λ₂ zugeordnete Strahlungsintensität im ersten Spektrum S₁.

Alternativ kann der zweite Wellenlängenbereich λ₂ wird derart gewählt, dass der dem zweiten Wellenlängenbereich λ₂ jeweils zugeordnete Intensitätswert im zweiten Spektrum größer ist als der dem zweiten Wellenlängenbereich λ₂ jeweils zugeordnete Intensitätswert im ersten Spektrum S₁.

Im vorliegenden Ausführungsbeispiel umfasst der Helligkeitssensor 10 zwei Teilsensoren jeweils mit separaten Farbkanälen. Der erste der beiden Teilsensoren detektiert die Intensität des Lichts im ersten Wellenlängenbereich λ₁ und ist für Licht im zweiten Wellenlängenbereich λ₂ nicht sensitiv. Der zweite der beiden Teilsensoren detektiert die Intensität des Lichts im zweiten Wellenlängenbereich λ₂ und ist für Licht im ersten Wellenlängenbereich λ₁ nicht sensitiv.

Bevorzugt kann der Sensor als Mehrpixelsensor ausgebildet sein und eine Anzahl von Sensorpixeln aufweisen, dir für den ersten aber nicht den zweiten Wellenlängenbereich sensitiv sind und eine weitere Anzahl von Sensorpixel aufweisen, die für das Licht des zweiten aber nicht für Licht des ersten Wellenlängenbereichs sensitiv sind.

Um das Vorhandensein eines Aufdrucks 5 mit der OVI-Tinte auf dem zu prüfenden Objekt 1 zu detektieren, wird die in **Fig. 1** dargestellte Anordnung verwendet. Das Objekt 1 ist in diesem Fall als ebener Gegenstand dargestellt, wobei auf einem Oberflächenpunkt 2 des Gegenstands die Lichtstrahlen 22, 32 zweier Lichtquellen 21, 31 gerichtet sind. Weiters ist der Sehstrahl 11 eines lichtempfindlichen Sensors 10 auf den Oberflächenbereich 2 gerichtet.

Die erste Lichtquelle 21 und der Lichtstrahl 22 der ersten Lichtquelle 21 sowie der Sehstrahl 11 des Sensors 10 stehen zueinander in einem ersten Winkel α.

Besonders bevorzugt kann der erste Winkel α in einem Bereich von 20° bis 40° und der zweite Winkel β in einem Bereich von 80° bis 100° gewählt werden. Alternativ kann der erste Winkel α in einem Bereich von 10° bis 50° und der zweite Winkel β in einem Bereich von 70° bis 110°, gewählt werden. Der dritte Winkel γ ist größer als 10°, insbesondere zwischen 20° und 50°. Der vierte Winkel δ ist größer als 10°, insbesondere zwischen 20° und 50°.

In **Fig. 2** ist weiters die Winkelsymmetrale 23 zwischen dem Sehstrahl 11 und dem ersten Lichtstrahl 22 der ersten Lichtquelle 21 dargestellt.

Der Winkel zwischen einem vom Oberflächenpunkt 2 des Objekts abgehenden und entlang der Winkelsymmetrale 23 zwischen dem ersten Lichtstrahl 22 und dem Sehstrahl verlaufenden ersten Symmetralstrahl 23 und einem normal zur Oberfläche des Objekts 1 stehenden und den Oberflächenpunkt 2 des Objekts 1 schneidenden Normalenstrahl 4 wird auf einen vorgegebenen dritten Winkel γ festgelegt, der bei der vorliegenden Ausführungsform einer erfindungsgemäßen Vorrichtung auf einen Winkel von 25° festgelegt wird. Dieser dritte Winkel γ ist typischerweise größer als 10°, um zu vermeiden, dass aufgrund der spiegelnden Reflexion des Lichts der zweiten Lichtquelle 31 an der Oberfläche des Gegenstands Anteile im Spektrum des reflektierten Lichts enthalten sind, die nicht von der OVI-Tinte beeinflusst sind, sondern unmittelbar an der Oberfläche des Gegenstands 1 reflektiert werden.

Der von der zweiten Lichtquelle 31 abgegebene Lichtstrahl 32 steht zu dem Sehstrahl 11 des Sensors 10 in einem Winkel, der dem zweiten Winkel β entspricht. In **Fig. 1 und 2** ist weiters die Winkelsymmetrale 33 zwischen dem Sehstrahl 11 und dem zweiten Lichtstrahl 32 dargestellt.

Der Winkel zwischen einem vom Oberflächenpunkt 2 des Objekts abgehenden und entlang der Winkelsymmetrale 33 zwischen dem zweiten Lichtstrahl 32 und dem Sehstrahl verlaufenden ersten Symmetralstrahl und einem normal zur Oberfläche des Objekts 1 stehenden und den Oberflächenpunkt 2 des Objekts 1 schneidenden normalen Strahl wird auf einen vorgegebenen vierten Winkel δ festgelegt, der bei der vorliegenden Ausführungsform einer erfindungsgemäßen Vorrichtung auf einen Winkel von 25° festgelegt wird. Dieser vierte Winkel δ ist typischerweise größer als 10°, um zu vermeiden, dass aufgrund der spiegelnden Reflexion des Lichts der ersten Lichtquelle 21 an der Oberfläche des Gegenstands Anteile im Spektrum des reflektierten Lichts enthalten sind, die nicht von der OVI-Tinte beeinflusst sind, sondern unmittelbar an der Oberfläche des Gegenstands 1 reflektiert werden.

Im vorliegenden Ausführungsbeispiel liegen sämtliche der genannten Strahlen 32, 33, 4, 11, 23, 22 auf einer Ebene.

Bei dem in **Fig. 1** dargestellten Ausführungsbeispiel der Erfindung sind der Sensor 10 sowie die beiden Lichtquellen 21, 22 so angeordnet, dass die erste Lichtquelle 21 zwischen bzw. der von der ersten Lichtquelle 21 abgehende Lichtstrahl 22 zwischen dem zweiten Lichtstrahl 32 und dem Sehstrahl 11 des Sensors 10 liegt.

In **Fig. 2** ist eine alternative Ausführungsform der Erfindung dargestellt, bei der der Sehstrahl 11 des Sensors 10 zwischen den beiden Lichtstrahlen 22, 32 der beiden Lichtquellen 21, 31 liegt. Aufgrund der konkreten Anordnung weichen bei dieser Ausführungsform der erste Winkel α und der zweite Winkel β von den entsprechenden Winkeln α, β der ersten Ausführungsform ab.

In **Fig. 3** sind die einzelnen Spektren dargestellt, die von einem mit OVI-Tinte bedruckten Gegenstand bei Bestrahlung mit weißem Licht jeweils unter unterschiedlichem Winkel abgegeben werden. In dem Bereich des Gegenstands, der oberflächlich mit OVI-Tinte versehen ist, befinden sich unterschiedliche Arten von in verschiedenen Wellenlängenbereichen unterschiedlich reflektierenden Teilchen. Diese Teilchen weisen eine bestimmte Ausrichtung auf, aufgrund derer sie das vorstehend beschriebene Reflexionsverhalten aufweisen. Bei Bestrahlung mit weißem Licht werden sie derart aktiviert, dass sie in unterschiedlichen Wellenlängenbereichen rückstrahlen.

Das Spektrum S₁ stellt dabei jenes Reflexionsspektrum dar, das ein mit einer OVI-Tinte bestrahlter Gegenstand bei Bestrahlung mit weißem Licht unter einem ersten Winkel α abgibt. Das Spektrum S₂ stellt dabei jenes Reflexionsspektrum dar, das ein mit einer OVI-Tinte bestrahlter Gegenstand bei Bestrahlung mit weißem Licht unter einem zweiten Winkel von β° abgibt

Der Gegenstand 1 wird mit einer nicht dargestellten Transporteinheit transportiert, insbesondere auf einem Förderband oder einer Transporttrommel. Durch Aufnahme einer Vielzahl von einzelnen Abbildungen ist es möglich, ein Bild des betreffenden Gegenstands bei Bestrahlung mit den beiden Lichtquellen 21, 32 zu erstellen und gleichzeitig anhand der Analyse der Häufungen feststellen zu können, ob betreffende Bereiche des abgebildeten Gegenstands mit einer OVI-Tinte bedruckt sind.

Zu diesem Zweck werden die einzelnen innerhalb eines Bereichs aufgenommenen Paare voneinander zugeordneten Sensormesswerten umfassend jeweils einen mit dem ersten Teilsensor erstellten ersten Intensitätswert I₁ und einem mit dem zweiten Teilsensor erstellten zweiten Intensitätswert I₂ miteinander verglichen. Die einzelnen einander zugeordneten Intensitätswerte werden, wie in **Fig. 4** dargestellt, in ein Diagramm eingetragen, wobei für jedes ermittelte Paar von Intensitätswerten I₁, I₂ jeweils ein Intensitätsvektor V in einem zweidimensionalen Diagramm erstellt wird und nach dessen erste Koordinate dem ersten Intensitätswert I₁ und dessen zweite Koordinate dem zweiten Intensitätswert I₂ entspricht. Mittels statistischer Methoden ist es möglich, zu ermitteln, ob die einzelnen Intensitätsvektoren V eine oder mehrere Häufungen bilden. Eine mögliche geeignete Methode zur Ermittlung solcher Vektoren ist beispielsweise eine Clusteranalyse mittels der k-means-Methode mit k=2. Ist ein Gegenstand mit einer OVI-Tine bedruckt, in dem sich zwei Arten unterschiedlicher und unterschiedlich ausgerichteter Teilchen befinden, und werden für einen mit einer solchen Tinte bedruckten Teilbereich 5 Intensitätsvektoren V aufgenommen, so bestehen bei der in **Fig. 4** dargestellten Abbildung zwei von einander abweichende Häufungen, von denen die erste Häufung H₁ von Intensitätsvektoren durch einen ersten Häufungsvektor V₁ charakterisiert ist, der den jeweiligen Intensitätswert I₁, I₂ bei den beiden Wellenbereichen λ₁, λ₂ entspricht. Die zweite Häufung H₂ von Intensitätsvektoren V wird durch einen zweiten Häufungsvektor V₂ charakterisiert, der den jeweiligen Intensitätswert I₁, I₂ bei den beiden Wellenlängebereichen λ₁, λ₂ entspricht.

Werden zwei solche derart unterscheidbaren Häufungen H₁, H₂ als vorliegend erkannt, wird das Objekt 1 als Oberflächenbereich 5, der mit OVI-Tinte bedruckt ist, erkannt.

Wird hingegen ein Oberflächenbereich 5 eines Objekts 1 aufgenommen, der nicht mit OVI-Tinte bedruckt ist, so ergibt sich lediglich eine einzige Häufung H₀ der Intensitätsvektoren V. In diesem Fall liegen eben gerade nicht zwei von einander unterscheidbare Häufungen vor und das Objekt 1 bzw. dessen inspizierter Oberflächenbereich wird dementsprechend als nicht OVI-Tinte bedruckt erkannt. (Fig. 5) In solchen, nicht mit OVI-Tinte bedruckten Bereichen ergibt sich lediglich entweder eine positive oder negative Korrelation der Intensitätswerte, was zu einer einzigen Häufung führt.

Je nach Art der verwendeten OVI-Tinte ergeben sich unterschiedliche Häufungen H₁, H₂ bzw. Häufungsvektoren V₁, V₂, sodass aufgrund des erstellten Diagramms auch eine Erkennung der konkreten für den Aufdruck verwendeten OVI-Tinte möglich ist.

## Patentansprüche

1. Verfahren zur Prüfung eines bedruckten Objekts (1) auf einen Aufdruck mit einer vorgegebenen OVI-Tinte, die bei Weißlicht-Bestrahlung einer mit ihr bedruckten Oberfläche unter einem vorgegebenen ersten Winkel (α) Licht mit einem ersten Spektrum (S₁) abgibt und bei Weißlicht-Bestrahlung einer mit ihr bedruckten Oberfläche unter einem vorgegebenen vom ersten Winkel (α) abweichenden zweiten Winkel (β) Licht mit einem zweiten Spektrum (S₂) abgibt, **dadurch gekennzeichnet, dass**
a) für eine Anzahl von Oberflächenpunkten (2) innerhalb eines Oberflächenbereichs (5) des Objekts jeweils die folgenden Schritte durchgeführt werden, nämlich dass
- der Sehstrahl (11) eines Helligkeitssensors (10) auf den jeweiligen Oberflächenpunkt (2) des Objekts (1) gerichtet wird, wobei mit dem Helligkeitssensor (10) Licht in zumindest zwei voneinander unterschiedlichen Wellenlängenbereichen (λ₁, λ₂) detektiert wird,
- der von einer ersten Lichtquelle (21) abgegebene erste Lichtstrahl (22) auf den Oberflächenpunkt (2) des Objekts (1) gerichtet wird, wobei der Sehstrahl (11) und der erste Lichtstrahl (22) in einem Winkel der Größe des ersten Winkels (α) zueinander angeordnet werden,
- der von einer zweiten Lichtquelle (31) abgegebene zweite Lichtstrahl (32) auf den Oberflächenpunkt (2) des Objekts (1) gerichtet wird, wobei der Sehstrahl (11) und der zweite Lichtstrahl (32) in einem Winkel der Größe des zweiten Winkels (β) zueinander angeordnet werden, und
- dass der Winkel zwischen einem vom Oberflächenpunkt (2) des Objekts (1) abgehenden und entlang der Winkelsymmetrale zwischen dem ersten Lichtstrahl (22) und dem Sehstrahl (11) verlaufenden ersten Symmetralstrahl (23) und einem normal zur Oberfläche(3) des Objekts (1) stehenden und den Oberflächenpunkt (2) des Objekts (1) schneidenden Normalenstrahl (4) auf einen vorgegebenen dritten Winkel (γ) festgelegt wird, und
- dass der Winkel zwischen einem vom Oberflächenpunkt (2) des Objekts (1) abgehenden und entlang der Winkelsymmetrale zwischen dem zweiten Lichtstrahl (32) und dem Sehstrahl (11) verlaufenden zweiten Symmetralstrahl (33) und dem Normalenstrahl (4) auf einen vorgegebenen vierten Winkel (δ) festgelegt wird, der insbesondere dem ersten Winkel (γ) entspricht, und
- jeweils mit dem Helligkeitssensor (10) sowohl Licht im ersten Wellenlängenbereich (λ₁) als auch im zweiten Wellenlängenbereich (λ₂) jeweils ein Intensitätswert ermittelt und dem jeweiligen Oberflächenpunkt (2) ein Intensitätsvektor (V) umfassend die beiden Intensitätswerte (I₁, I₂) zugewiesen wird, und
b) anschließend überprüft wird, ob innerhalb der für den jeweiligen Oberflächenbereich (5) Helligkeitswerte ermittelten und den einzelnen Oberflächenpunkten (2) zugewiesenen Intensitätswerte (I₁, I₂) bei den beiden Wellenlängen (λ₁, λ₂) zwei voneinander abweichende Häufungen (H₁, H₂) bestehen,
wobei insbesondere die erste Häufung (H₁) von Intensitätsvektoren durch einen ersten Häufungsvektor (V₁) charakterisiert ist, der den jeweiligen Intensitätswerten (I₁, I₂) bei den beiden Wellenlängenbereichen (λ₁, λ₂) entspricht und die zweite Häufung (H₂) von Intensitätsvektoren durch einen zweiten Häufungsvektor (V₂) charakterisiert ist, der den jeweiligen Intensitätswerten (I₁, I₂) bei den beiden Wellenlängenbereich (λ₁, λ₂) entspricht, und
c) bei Vorliegen zweier solcher unterscheidbarer Häufungen (H₁, H₂) das Objekt (1) im Oberflächenbereich (5) als mit OVI-Tinte, insbesondere bzw. OVI-Tinte eines speziellen Typs, bedruckt erkannt wird.

2. Verfahren nach Anspruch 1, **dadurch gekennzeichnet, dass** der erste Winkel (α) in einem Bereich von 20° bis 40° und der zweite Winkel (β) in einem Bereich von 80° bis 100° gewählt wird oder dass der erste Winkel (α) in einem Bereich von 10°bis 50° und der zweite Winkel (β) in einem Bereich von 70° bis 110°, gewählt wird, und/oder dass der dritte Winkel (γ) größer als 10°, insbesondere zwischen 20° und 50° liegt, und dass der vierte Winkel (δ) größer als 10°, insbesondere zwischen 20° und 50° liegt.

3. Verfahren nach Anspruch 1 oder 2, **dadurch gekennzeichnet, dass** der Sehstrahl (11), der erste Lichtstrahl (22) und der zweite Lichtstrahl (32), die Symmetralstrahlen (23, 33) sowie der Normalenstrahl (4) in dieselbe Ebene gelegt werden.

4. Verfahren nach einem der vorangehenden Ansprüche, **dadurch gekennzeichnet,**
**dass** die Intensität des von der ersten Lichtquelle (21) abgegebenen ersten Lichtstrahls (22) im ersten der Wellenlängenbereiche (λ₁) derart gewählt wird, dass die diesem Wellenlängenbereich (λ₁) jeweils zugeordnete Strahlungsintensität im ersten Spektrum (S₁) größer ist als die diesem Wellenlängenbereich (λ₁) jeweils zugeordnete Strahlungsintensität im zweiten Spektrum (S₂), **und/oder**
**dass** die Intensität des von der zweiten Lichtquelle (31) abgegebenen zweiten Lichtstrahls (32) im jeweils anderen zweiten Wellenlängenbereich (λ₂) derart gewählt wird, dass die diesem zweiten Wellenlängenbereich (λ₂) jeweils zugeordnete Strahlungsintensität im zweiten Spektrum (S₂) größer ist als die dem zweiten Wellenlängenbereich (λ₂) zugeordnete Strahlungsintensität im ersten Spektrum (S₁).

5. Verfahren nach einem der vorangehenden Ansprüche, **dadurch gekennzeichnet, dass** der erste Wellenlängenbereich (λ₁) derart gewählt wird, dass der dem ersten Wellenlängenbereich (λ₁) jeweils zugeordnete Intensitätswert (I₁) im ersten Spektrum (S₁) größer ist als der dem ersten Wellenlängenbereich (λ₁) jeweils zugeordnete Intensitätswert (I₁) im zweiten Spektrum (S₂), **und/oder,**
dass der zweite Wellenlängenbereich (λ₂) gewählt derart gewählt wird, dass der dem zweiten Wellenlängenbereich (λ₂) jeweils zugeordnete Intensitätswert (I₂) im zweiten Spektrum (S₂) größer ist als der dem zweiten Wellenlängenbereich (λ₂) jeweils zugeordnete Intensitätswert (I₂) im ersten Spektrum (S₁).

6. Verfahren nach einem der vorangehenden Ansprüche, **dadurch gekennzeichnet, dass** der Helligkeitssensor (10) zwei Teilsensoren mit separaten Farbkanälen aufweist, wobei mit dem ersten der beiden Teilsensoren ausschließlich die Intensität des Lichts im ersten Wellenlängenbereich (λ₁) detektiert wird und der Anteil des von der ersten Lichtquelle (21) abgegebenen und vom Objekt (1) reflektierten Lichts im ersten Wellenlängenbereich (λ₁) ermittelt wird und mit dem zweiten Teilsensor (15) die Intensität des Lichts, insbesondere ausschließlich im zweiten Wellenlängenbereich (λ₂), detektiert wird und der Anteil des von der zweiten Lichtquelle (31) abgegebenen und vom Objekt (1) reflektierten Licht im zweiten Wellenlängenbereich (λ₂) ermittelt wird.

7. Verfahren nach einem der vorangehenden Ansprüche, **dadurch gekennzeichnet, dass** von der ersten Lichtquelle (21) aus Licht innerhalb eines dritten Wellenlängenbereichs (λ₃), insbesondere im Infrarotbereich, auf den jeweiligen Objektpunkt (2) des Objekts (1) eingestrahlt wird, und dass vom Helligkeitssensor (10) der vom Objekt (1) bei einer dritten Wellenlänge (λ₃) zurückgestrahlte Intensitätswert (I₃) ermittelt wird,
wobei ein Bildpunkt, bei dem der jeweilige Intensitätswert (I₃) für den dritten Wellenlängenbereich (λ₃)mit dem ersten Intensitätswert (I₁) für den ersten Wellenlängenbereich (λ₁) oder mit dem zweiten Intensitätswert (I₂) für den zweiten Wellenlängenbereich (λ₂) korreliert der Oberflächenbereich (5) als mit OVI-Tinte bedruckt erkannt wird.

8. Verfahren nach einem der vorangehenden Ansprüche, **dadurch gekennzeichnet, dass** gleichzeitig eine Anzahl von auf einer Linie (6) der Oberfläche des Objekts (1) liegenden Oberflächenpunkten (2) inspiziert wird, wobei
- gleichzeitig durch eine Anzahl von separaten gemeinsam linienförmig hintereinander angeordneten Helligkeitssensoren (10) jeweils Intensitätswerte (I₁, I₂) bei zumindest den beiden Wellenlängenbereichen (λ₁, λ₂) aufgenommen werden, wobei die Helligkeitssensoren (10) jeweils auf einen auf der Linie der Oberfläche (3) des Objekts (1) liegenden Oberflächenpunkt (2) gerichtet werden,
- die jeweils ersten Lichtstrahlen (22) und zweiten Lichtstrahlen (32) jeweils von einer einzigen ersten und zweiten Linienlichtquelle (21, 31) auf die Linie der Oberfläche des Objekts (3) projiziert werden, und
- dass das Objekt (1) normal oder im Winkel zur Richtung der Linie sowie ohne Änderung des Abstands zu den Lichtquellen (22, 32) und zu den Helligkeitssensoren (10), insbesondere von einem Förderband oder einer Transporttrommel, fortbewegt wird.

9. Verfahren nach einem der vorangehenden Ansprüche, **dadurch gekennzeichnet,**
- **dass** von den Lichtquellen (21, 31) jeweils weißes Licht abgegeben wird, oder
- **dass** von den Lichtquellen (21, 31) Licht abgegeben wird, das innerhalb eines Teilbandes des sichtbaren Lichts eine einen Schwellenwert überschreitende Intensität aufweist.

10. Vorrichtung zur Prüfung eines bedruckten, insbesondere auf einem Objektträger befindlichen, Objekts (1) auf einen Aufdruck (5) mit einer vorgegebenen OVI-Tinte, die bei Weißlicht-Bestrahlung einer mit ihr bedruckten Oberfläche unter einem vorgegebenen ersten Winkel (α) Licht mit einem ersten Spektrum (S₁) abgibt und bei Weißlicht-Bestrahlung einer mit ihr bedruckten Oberfläche unter einem vorgegebenen vom ersten Winkel (α) abweichenden zweiten Winkel (β) Licht mit einem zweiten Spektrum (S₂) abgibt, **gekennzeichnet durch**
a) einen Helligkeitssensor (10) zur Bestimmung der Lichtintensität in zumindest zwei voneinander unterschiedlichen Wellenlängenbereichen (λ₁, λ₂), dessen Sehstrahl (11) auf den jeweiligen Oberflächenpunkt (2) des Objekts (1) gerichtet ist, wobei am Ausgang des jeweiligen Helligkeitssensors (10) ein Intensitätsvektor (V) umfassend zwei Intensitätswerte (I₁, I₂) anliegen, wobei der erste Intensitätswert (I₁) der Intensität des auf den Helligkeitssensor (10) einstrahlenden Lichts im ersten Wellenlängenbereich (λ₁) entspricht und wobei der zweite Intensitätswert (I₂) der Intensität des auf den Helligkeitssensor (10) einstrahlenden Lichts im zweiten Wellenlängenbereich (λ₂) entspricht,
b) eine erste Lichtquelle (21) zur Abgabe eines ersten Lichtstrahls (22), der auf einen Oberflächenpunkt (2) des Objekts (1) gerichtet ist, wobei der Sehstrahl (11) und der erste Lichtstrahl (22) in einem Winkel der Größe des ersten Winkels (α) zueinander stehen,
c) eine zweite Lichtquelle (31) zur Abgabe eines zweiten Lichtstrahls (32), der auf den Oberflächenpunkt (2) des Objekts (1) gerichtet ist, wobei der Sehstrahl (11) und der zweite Lichtstrahl (32) in einem Winkel der Größe des zweiten Winkels (β) zueinander stehen,
- dass der Winkel zwischen einem vom Oberflächenpunkt (2) des Objekts (1) abgehenden und entlang der Winkelsymmetrale zwischen dem ersten Lichtstrahl (22) und dem Sehstrahl (11) verlaufenden ersten Symmetralstrahl (23) und einem normal zur Oberfläche (3) des Objektträgers (7) stehenden und den Oberflächenpunkt (2) des Objekts (1) schneidenden Normalenstrahl (4) auf einen vorgegebenen Wert (γ) festgelegt ist, und
- dass der Winkel zwischen einem vom Oberflächenpunkt (2) des Objekts (1) abgehenden und entlang der Winkelsymmetrale zwischen dem zweiten Lichtstrahl (32) und dem Sehstrahl (11) verlaufenden zweiten Symmetralstrahl (33) und dem Normalenstrahl (4) auf denselben Wert (γ) festgelegt ist, und
d) eine Prüfungseinheit, der die einzelnen Intensitätsvektoren (V) von Oberflächenpunkten (2) in einem Oberflächenbereich (5) des zu prüfenden Objekts (1) zugeführt sind, die bei Zuführung der einzelnen Intensitätsvektoren (V) überprüft, ob innerhalb der für die jeweiligen Intensitätswerte ermittelten und den einzelnen zugewiesenen Intensitätswerte (I₁, I₂) bei den beiden Wellenlängen (λ₁, λ₂) zwei voneinander abweichende Häufungen (H₁, H₂) bestehen, von denen die erste Häufung (H₁) von Intensitätsvektoren (V) um einen ersten Häufungsvektor (HV₁) auftritt, der den jeweiligen Intensitätswerten (I₁, I₂) des ersten Spektrums (S₁) bei den beiden Wellenlängenbereichen (λ₁, λ₂) entspricht und, von denen die zweite Häufung (H₂) von Intensitätsvektoren (V) um einen zweiten Häufungsvektor (HV₂) auftritt, der den jeweiligen Intensitätswerten (I₁, I₂) des zweiten Spektrums (S₂) bei den beiden Wellenlängenbereichen (λ₁, λ₂) entspricht, und die bei Vorliegen zweier solcher Häufungen das Objekt im Oberflächenbereich (5) als mit OVI-Tinte bedruckt erkennt.

11. Vorrichtung nach Anspruch 10, **dadurch gekennzeichnet, dass** der erste Winkel (α) in einem Bereich von 20°bis 40° und der zweite Winkel in einem Bereich von 80°-100° liegtoder dass der erste Winkel (α) in einem Bereich von 10°bis 50° und der zweite Winkel (β) in einem Bereich von 70° bis 110°, liegt, und/oder
dass der dritte Winkel (γ) größer als 10°, insbesondere zwischen 20° und 50° liegt, und dass der vierte Winkel (δ) größer als 10°, insbesondere zwischen 20° und 50° liegt.

12. Vorrichtung nach Anspruch 10 oder 11, **dadurch gekennzeichnet, dass** der Sehstrahl (11), der erste Lichtstrahl (22) und der zweite Lichtstrahl (32), die Symmetralstrahlen (23, 33) sowie der Normalenstrahl (4) in dieselbe Ebene liegen.

13. Vorrichtung nach einem der Ansprüche 10 bis 12, **dadurch gekennzeichnet,**
**dass** die Intensität des von der ersten Lichtquelle (21) abgegebenen ersten Lichtstrahls (22) im ersten Wellenlängenbereich (λ₁) derart festgelegt ist, dass der dem ersten Wellenlängenbereich (λ₁) jeweils zugeordnete Intensitätswert im ersten Spektrum (S₁) größer ist als der den ersten Wellenlängenbereich (λ₁) jeweils zugeordnete Intensitätswert im zweiten Spektrum (S₂), **und/oder**
**dass** die Intensität des von der zweiten Lichtquelle (31) abgegebenen zweiten Lichtstrahls (32) im zweiten Wellenlängenbereich (λ₂) derart festgelegt ist, dass der dem zweiten Wellenlängenbereich (λ₂) jeweils zugeordnete Intensitätswert im zweiten Spektrum (S₂) größer ist als der dem zweiten Wellenlängenbereich (λ₂) zugeordnete Intensitätswert im ersten Spektrum (S₁).

14. Vorrichtung nach einem der Ansprüche 9 bis 13, **dadurch gekennzeichnet, dass** der erste Wellenlängenbereich (λ₁) derart festgelegt ist, dass der dem ersten Wellenlängenbereich (λ₁) jeweils zugeordnete Intensitätswert im ersten Spektrum (S₁) größer ist als der dem ersten Wellenlängenbereich (λ₁) jeweils zugeordnete Intensitätswert im zweiten Spektrum (S₂), **und/oder,**
dass der zweite Wellenlängenbereich (λ₂) gewählt derart gewählt ist, dass der dem zweiten Wellenlängenbereich (λ₂) jeweils zugeordnete Intensitätswert im zweiten Spektrum (S₂) größer ist als der dem zweiten Wellenlängenbereich (λ₂) jeweils zugeordnete Intensitätswert im ersten Spektrum (S₁).

15. Vorrichtung nach einem der Ansprüche 9 bis 14, **dadurch gekennzeichnet, dass** der Helligkeitssensor (10) zwei Teilsensoren (14, 15) mit separaten Farbkanälen aufweist, wobei der erste der beiden Teilsensoren (14) ausschließlich für den ersten Wellenlängenbereich (λ₁) sensitiv ist und den Anteil der von der ersten Lichtquelle (21) abgegebenen und vom Objekt (1) reflektierten Licht im ersten Wellenlängenbereich (λ₁) ermittelt und der zweite Teilsensor (15), insbesondere ausschließlich für den zweiten Wellenlängenbereich (λ₂) sensitiv ist und den Anteil der von der zweiten Lichtquelle (31) abgegebenen und vom Objekt (1) reflektierten Licht im zweiten Wellenlängenbereich (λ₂) ermittelt.

16. Vorrichtung nach einem der Ansprüche 9 bis 15, **dadurch gekennzeichnet, dass** von der ersten Lichtquelle (21) aus Licht innerhalb eines dritten Wellenlängenbereichs (λ₃), insbesondere im Infrarotbereich, auf den jeweiligen Objektpunkt (2) des Objekts (1) eingestrahlt wird, und dass vom Helligkeitssensor (10) der vom Objekt (1) bei einer dritten Wellenlänge (λ₃) zurückgestrahlte Intensitätswert (I₃) mit dem ersten Intensitätswert (I₁) für den ersten Wellenlängenbereich (λ₁) oder mit dem zweiten Intensitätswert (I₂) für den zweiten Wellenlängenbereich (λ₂) korreliert der Oberflächenbereich (5) als mit OVI-Tinte bedruckt erkannt wird.

17. Vorrichtung nach einem der Ansprüche 10 bis 16 zur gleichzeitigen Inspektion einer Anzahl von auf einer Linie (6) der Oberfläche des Objekts (1) liegenden Oberflächenpunkte (2), **dadurch gekennzeichnet, dass**
- eine Anzahl von separaten gemeinsam linienförmig hintereinander angeordneten Helligkeitssensoren (10) zur Aufnahme von Helligkeitswerten vorgesehen sind, die jeweils auf einen auf der Linie (6) der Oberfläche des Objekts (1) liegenden Oberflächenpunkt (2) gerichtet sind,
- dass die Lichtquellen (21, 31) als Linienlichtquellen (21, 31) ausgebildet sind, wobei die erste Lichtquelle (21) eine ersten Lichtebene (22) und die zweite Lichtquelle (31) eine zweite Lichtebene (32) auf die Linie (6) der Oberfläche des Objekts (1) abgibt, und
- dass gegebenenfalls eine Fördereinrichtung zur Bewegung des Objekts (1) normal oder im Winkel zur Richtung der Linie (6) sowie ohne Änderung des Abstands zu den Lichtquellen (22, 32) und zu den Helligkeitssensoren (10), insbesondere ein Förderband oder eine Trommel zur Beförderung des Objekts, aufweist.

18. Vorrichtung nach einem der Ansprüche 10 bis 17, **dadurch gekennzeichnet,**
- **dass** die beiden Lichtquellen (21, 31) jeweils weißes Licht abstrahlen, oder
die beiden Lichtquellen (21, 31) jeweils Licht abstrahlen, das innerhalb eines Teilbandes des sichtbaren Lichts eine einen Schwellenwert überschreitende Intensität aufweist.

19. Datenträger auf dem ein Programm zur Durchführung eines Verfahrens nach einem der Ansprüche 1 bis 9 abgespeichert ist.
